# EUROPEAN PATENT APPLICATION

(11) **EP 0 527 475 A1**
(43) Date of publication of application: **17.02.1993**
(21) Application number: 92113701.4
(22) Date of filing: 11.08.1992
(51) Int. Cl.: C08F 210/14

(54) **Process for the copolymerization of 4-methyl-1-pentene**

(30) Priority: 13.08.1991 US 744174
(71) Applicant: PHILLIPS PETROLEUM COMPANY, Bartlesville Oklahoma 74004 (US)
(72) Inventor: Stricklen, Phil Marvin, Bartlesville, OK 74006 (US); Rooney, Patrick, Bartlesville, OK 74006 (US)
(74) Representative: Dost, Wolfgang, Dr.rer.nat., Dipl.-Chem.

(57) **Abstract**

A process for producing a 4-methyl-1-pentene copolymer comprising carrying out a batch copolymerization of 4-methyl-1-pentene and at least one alpha olefin comonomer wherein once polymerization of the comonomer has begun comonomer is added continuously such that the amount of that specific comonomer in the reaction vessel is relatively constant during the polymerization. Also novel 4MP1 copolymers are disclosed, including copolymers that are unusually homogenous.

## Description

### Field of the Invention

The present invention relates to the polymerization of 4-methyl-1-pentene (also referred to herein as 4MP1). More specifically the present invention relates to forming copolymers of 4-methyl-1-pentene with an alpha-olefin comonomer. The present invention is particularly applicable to bulk slurry copolymerizations.

### Background of the Invention

Homopolymers of 4-methyl-1-pentene have some properties which arc particularly desirable such as transparency. It has been discovered by those skilled in the art, however, that certain properties of such polymers can be improved by incorporating comonomers. Some examples of processes for preparing copolymers of 4-methyl-1-pentene are disclosed in U.S. Patent Nos. 3,489,735 and 4,146,591, the disclosures of which are incorporated herein by reference.

The homopolymerization and copolymerization of 4-methyl-1-pentene is generally carried out in a batch polymerization process. The term "batch polymerization" is used to refer to a polymerization in which a quantity of the monomers are polymerised in a reaction vessel and then the resulting polymer is recovered from that reaction vessel upon the desired level of polymerization of the monomers. It is also known in the art that it is desirable to carry out such polymerizations under conditions which result in a slurry of particles of the desired polymer or copolymer in the polymerization diluent rather than a solution of the polymer or copolymer. The formation of such a slurry aids in the separation and purification of the resulting polymer.

The present applicants have conducted a large number of batch copolymerizations of 4-methyl-1-pentene copolymers using techniques such as those taught in the art. One of the facts that the applicants have noted in using such prior art disclosed processes is that polymeric materials are formed which dissolve in the polymerization diluent. The presence of the soluble polymeric materials has been noted to often coat the interior of the reaction vessel. If such polymeric materials are allowed to accumulate over successive batches of polymers, the soluble polymer can result in significant reductions in the efficiency of heat transfer in the reactor. Accordingly, in using polymerization processes of the type taught in the prior art, it has been necessary to thoroughly wash the reaction vessel periodically to assure that soluble polymeric material is removed from the reaction vessel before additional batch polymerizations of 4-methyl-1-pentene are conducted.

Obviously, it would be advantageous to have a process for producing such copolymers which would reduce the formation of such soluble polymeric material.

An object of the present invention is to provide processes which reduce the amount of soluble polymeric material produced in a batch slurry copolymerization of 4-methyl-1-pentene. Another object of one embodiment of this invention is to produce copolymers of 4MP1 and alpha olefins which copolymers are relative homogeneous. Other aspects, objects, and advantages of the present invention will be apparent to those skilled in the art having the benefit of the following disclosure.

### Description of Drawing

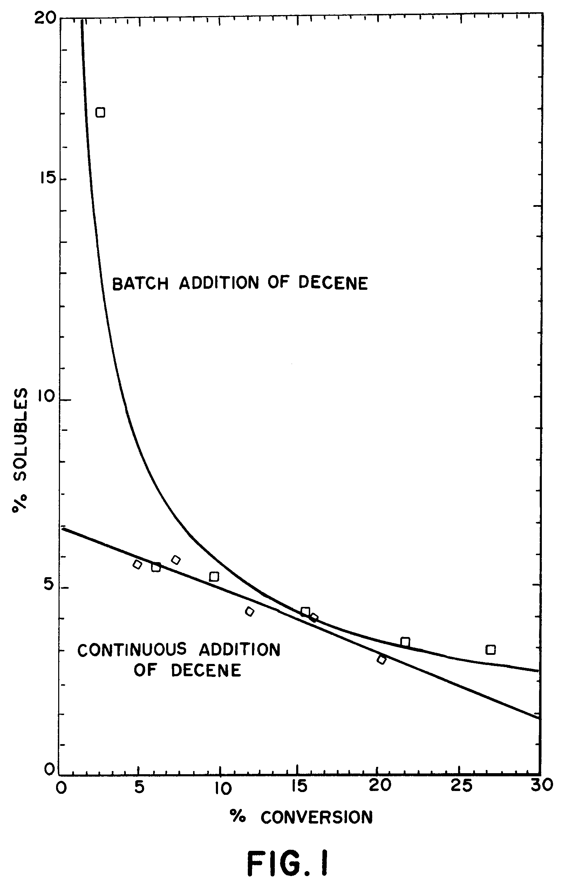

Figure 1 is a graph illustrating the benefits of an embodiment of the present invention.

### Summary of the Invention

In accordance with the present invention there is provided a process for producing a 4-methyl-1-pentene copolymer by carrying out a batch copolymerization of 4-methyl-1-pentene and at least one alpha-olefin comonomer tinder suitable slurry batch polymerization conditions in the presence of a suitable catalyst in a reaction vessel wherein once comonomer has been added to the reactor, additional comonomer is added throughout the polymerization so that the amount of that specific comonomer present in the reaction vessel is maintained relatively constant during the polymerization.

### Detailed Description of the Invention

The present invention is considered applicable to the formation of copolymers of 4-methyl-1-pentene with minor amounts of generally any alpha-olefin, i.e. a 1-olefin, which has a faster polymerization rate and with the particular catalyst system than does the 4-methyl-1-pentene. Particularly favored alpha-olefins are the linear 1-olefins having from about 2 to about 18 carbon atoms, more commonly about 5 to about 18 carbon atoms per molecule. Examples of such olefins include 1-pentene, 1-hexene, 1-octene, 1-decene, 1-hexadecene, and the like. It is also within the scope of the present invention to use mixtures of such alpha-olefins. The amount of comonomer employed can vary over a wide range. Typically, however, the comonomer is employed in an amount such that the total amount of comonomer in the resulting polymer would be in the range of about 0.5 to about 20 weight percent, more often about 0.5 to about 10 weight percent.

As is known in the, art, it is desirable to carry out 4MP1 copolymerization in a diluent suitable for the formation of a slurry of copolymer. Generally the polymerization is carried out as a bulk polymerization, that is a polymerization in which the 4-methyl-1-pentene is itself used as the liquid diluent for the polymerization. Other liquids under certain circumstances could also be employed in place of or in additon to 4MP1, examples of such liquids include petroleum ether, a petroleum fraction boiling between 180°C and 220°C, and linear alkanes such as n-decane and n-heptane.

The catalyst system employed for the polymerization can be selected from any known catalyst system which is capable of producing an insoluble copolymer of 4-methyl-1-pentene. Such catalysts are generally referred to in the art as stereospecific catalysts, that is catalysts which are known to be capable of producing large amounts of hydrocarbon insoluble polymer. Some examples of such catalyst systems are disclosed in U.S. Patent Nos. 3,489,735; 4,146,591; and 4,798,866, the disclosures of which are incorporated herein by reference. The currently preferred catalyst system is the combination of a dialkylaluminum halide in combination with titanium trichloride. The dialkylaluminum chloride is generally referred to as a cocatalyst and the titanium trichloride component is generally referred to as the catalyst. Various compositions containing titanium trichloride are known in the art as being suitable for use in stereospecific catalyst systems for olefins such as 4-methyl-1-pentene or propylene. Generally, any of those titanium trichloride-containing catalysts are considered to be suitable for the present invention.

The particular reaction conditions employed can vary over a wide range depending upon the particular results desired. As a general rule, it is desirable, to carry out The polymerization in the absence of air and water or in the presence of only limited amounts of air or water since both deactivate the catalyst. Nitrogen is often used to purge the reaction vessel before polymerization. Typically the polymerization pressure is in the range of from about atmospheric to about 500 psi, more commonly from about atmospheric to about 50 psi.

The polymerization temperature can range over a wide range depending upon the solubility of the polymer to be produced, the activity of the catalyst and the results desired. Typically, temperatures in the range of about 40 to 90°C would be used. More commonly temperatures in the range of about 40 to 50°C are used. Generally lower temperatures are needed for higher molecular weight comonomers.

In accordance with the present invention comonomer is combined with the 4-methyl-1-pentene. Once polymerization of the comonomer has begun, then additional comonomer is added to assure that the amount of the specific comonomer present in the reaction vessel is maintained relatively constant during the period of polymerization. Stated differently, once the comonomer begins to be used in the formation of the copolymer, additional comonomer is added at a rate sufficient to replace the comonomer which has been incorporated into the copolymer. It is within the scope of the present invention to begin the copolymerization with a mixture of the 4-methyl-1-pentene and comonomer present in the reaction vessel.

In a particularly preferred embodiment, it is desirable to first polymerize a small amount of the 4-methyl-1-pentene before any comonomer is added to the reaction vessel for polymerization. It has been noted that the formation of a small amounts of homopolymer of 4-methyl-1-pentene prior to the formation of any copolymer can provide additional reduction in the amount of soluble materials which can contribute to reactor fouling. The amount of homopolymer that is formed can vary depending upon the particular results desired. Typically, the amount of homopolymer formed in such an embodiment is such that it does not interfere with the overall nature of the desired copolymer. The optimum amounts of homopolymerization can he determined by routine experimentation. The weight percentage of comonomer employed is generally adjusted so that the average weight percent comonomer in a polymer is at the desired level. Preferably an amount of homopolymerization is allowed which provides a reduction in the total amount of solubles present during the initial stages of the copolymerization ever and above the reduction provided by continuous replacement of polymerized comonomer. Typically the amount of 4-methyl-1-pentene converted to homopolymer would be about 0.1 to about 50 weight percent of the total 4-methyl-1-pentene conversion during the total polymerization, mere typically about 0.5 to about 25 weight percent, still more commonly about 1 to about 20 weight percent.

The polymers resulting from the present invention can be recovered and purified using those techniques generally known in the art. The carbitol is generally deactivated in a customary manner such as by adding an alcohol such as methanol, ethanol, n-propanol, isopropanol, Butyl Carbitol®, or isobutanol. Then the resulting solid copolymer can be separated and recovered using known solid liquid separating procedures for example decanting or filtering. The polymer can be purified by washing with suitable solvents such as hydrocarbons.

The resulting copolymers can be used to prepare a variety of products depending upon the particular physical properties of the polymer.

A further understanding of the present invention and its objects and advantages will be provided by the following examples.

### Example I

Batch slurry copolymerizations of 4-methyl-1-pentene and 1-decene were carried out in a 115 liter reactor to evaluate the effects of the present invention as compared to a batch process in which all the monomer and comonomer were present at the very beginning of the polymerization. For both polymerizations, the reaction conditions were the same except for the amount of decene charged and the way in which the decene was charged. The catalyst system employed was a titanium trichloride type catalyst used in conjunction with the dialkylaluminum chloride cocatalyst. In both cases samples were taken from the reactor at various times during the two-hour polymerization. The samples were filtered and then analyzed for the mole percent decene content. The samples were also analyzed for the amount of soluble polymer present in the liquid sample. The weights and decene contents were used to estimate the decene content of the polymer made during each interval of the polymerization run. The results for percent solubles is summarized in Figure 1.

In the process in which all the monomer and comonomer were present together initially, the polymer made early on in the polymerization contained about 3.7 mole percent decene even though the mole percent decene at the end of the polymerization was about 2.2 mole percent. Calculations show that at the end of this polymerization, the copolymer being produced contained only about 1 mole percent decene. This means that the copolymer molecules made at the beginning of the polymerization run bad an average length of about 27 4MP1 units between linear branches while those copolymer molecules produced near the end of the polymerization run had average run lengths of about 100 4MP1 units between linear branches. It is known that the higher the comonomer content the more soluble the polymer. Accordingly, it follows that this particular process results in a situation in which at least during the initial stages of the polymerization a polymer is being made which is much more soluble than a polymer having the decene content of the final product.

In contrast when the 1-decene copolymer was added continuously during the polymerization to replace the decene which had been polymerized, the decene content of the polymer being formed was relatively constant throughout the polymerization run, with the copolymer being produced at the end of the run having essentially the same decene content as the copolymer that was being produced at the beginning of the run.

Although the total solubles level at the end of these two batch polymerizations was similar, the level of solubles produced at different stages in the polymerization were quite different, for example, in the conventional batch copolymerization at 5% conversion the weight percent soluble copolymer based on the total weight polymer formed was about 18 weight percent whereas at the same time period during the inventive polymerization the weight percent solubles was only about 6 weight percent based upon the total polymer produced in that period.

### Example II

Pilot plant scale copolymerizations were conducted to further evaluate the effects of continuous addition of comonomer versus batch addition of comonomer. In both types of polymerizations the basic recipe was 1,200 lbs. 4MP1, 2 lbs. diethylaluminum chloride. 90 grams titanium trichloride. The polymerization time was 3 and 1/2 hours at 122°F. Hydrogen was used to aid in the production of polymers of a specific melt flow range. The amount of hydrogen was the same for all runs.

In the runs using batch addition of the comonomer, the batch charge of 1 decene was 21 lbs. In the inventive runs employing continuous addition of the comonomer, the initial batch included 14.5 lbs. of 1-decene and additional 15 lbs. of 1-decene was added during the polymerization by continually adding decene at a given rate.

The targeted decene content for the copolymer produced by both processes was about 1.8 mole percent. The actual copolymer produced using the continuous addition had a slightly higher decene content than planned, which apparently indicates that too much decene was employed during the initial charge. The important point, however, is that the inventive process using continuous addition of comonomer resulted in about 35 weight percent less soluble polymers than did the process in which the comonomer was all added as one batch.

### Example III

Another series of pilot plant scale experiments were conducted with the aim of again comparing batch addition of comonomer versus continuous addition of comonomer versus continuous addition comonomer but in this case to produce a copolymer having a more comparable mole percent comonomer. The conditions for polymerization were as explained in Example II. The charge of 4MP1 was 1,200 lbs. In the batch addition polymerizations the decene charge was 20.5 lbs. In the inventive continuous addition polymerizations, 11 lbs. of the 1-decene was included with the initial 1200 lbs. of 4MP1 and then 15 additional lbs. of the 1-decene was added over the course of the polymerization by addition of the comonomer at a constant rate. 32 batches were prepared using the batch addition of comonomer and 44 batches were made using the continuous addition of comonomer. The average melt flow and average decene content of the resin produced via the batch decene addition and continuous decene addition were approximately equivalent. The average decene content for the batch addition being about 1.86 and that for the continuous addition 1.88. The melt flow for the batch addition being about 18.8 and the continuous addition about 19.7.

During the carrying out of the 32 batch decene addition polymerization batches, it was necessary on three occasions to wash to polymerization reactor with hot solvent because of fouling on the heat transfer surfaces. In contrast, during the 44 continuous decene addition batch polymerizations no fouling was observed which required a hot solvent washing of the polymerization reactor.

The properties of the polymers produced using the continuous addition of comonomer and the batch addition of comonomer in this example and in Example II were evaluated using standard techniques. While there were slight variations in properties between the copolymers produced using batch addition of comonomer and the copolymers using continuous addition of comonomer, overall, these differences were extremely minor and were well within the error range of the tests employed. Accordingly, the tests suggest that there is no statistical difference between the polymers produced using the two processes in properties such as flexural modulus, tensile strength, elongation, izod impact, and haze.

The amount of soluble polymer produced using the continuous comonomer addition was, however, significantly less than that produced using batch addition of the comonomer. Accordingly, the continuous comonomer addition of the present invention will reduce the size of the soluble polymer waste stream of the process. The reduction in solubles production will also decrease operating costs. Even though the continuous decene addition process requires the employment of approximately 20 percent more decene, the reduction in the production of soluble copolymer is such that the total amount of decene required per quantity of insoluble copolymer is less for the inventive process than for the batch copolymerization process.

### Example IV

### Sequential Copolymerization With Continuous Comonomer Addition

A stainless steel reactor having a volume of 115 liters which had been purged with nitrogen was charged 50 kg of 4-methyl-1-pentene, 4.97 g of titanium trichloride catalyst, 30.0 g of diethylaluminum chloride cocatalyst, and 4.69 moles of hydrogen. The contents were stirred and brought to 50 C. After fifteen minutes, 600 g of 1-decene was added to the reactor in one charge. A continuous flow of 1-decene at the rate of 2 g/min was added to the reactor until the polymerization was terminated. The total amount of 1-decene charged to the reactor was 740 grams. The polymerization was continued for two hours at which time a solution of propylene oxide and acetylacetone was added to terminate the polymerization reaction and to make the deactivated catalyst soluble in the liquid monomer. The polymer was filtered and washed twice with n-heptane to remove the catalyst residues. The polymer was dried and stabilized 0.1 wt.% Irganox 1010, 0.2 wt.% DLTDP, and 0.04 wt% zinc stearate. The polymer fluff was pelletized and injection molded into parts which were tested for mechanical properties.

Samples were taken from the reactor at 15 minute intervals, beginning at the time the reactor reached 50 C. Table 1 contains the data analyzed from each of these samples.

**Table 1**

| Samples Taken For Example IV | | | |
|---|---|---|---|
| Time | % Conversion | Mole % Comonomer in the Polymer | Wt. % of the Polymer in Solution |
| 0 | 1.58 | 0 | 2.70 |
| 15 | 4.08 | 0 | 3.00 |
| 30 | 6.20 | .17 | 3.18 |
| 60 | 11.21 | 1.13 | 2.80 |
| 90 | 16.02 | 1.41 | 2.49 |
| 120 | 21.56 | 1.45 | 2.45 |

The percentage of polymer which was soluble in the liquid monomer stayed low throughout the run. The concentration of decene comonomer increased and then leveled off toward the end of the batch time.

### Example V

### Sequential Copolymerization With Continuous Comonomer Addition

The procedure of Example IV was repeated except that 700 g of 1-decene was added at the 15 minute point. The data from the samples taken during this experiment are shown in Table 2.

**Table 2**

| Samples Taken for Example V | | | |
|---|---|---|---|
| Time | % Conversion | Mole % Comonomer in the Polymer | Wt. % of the Polymer in Solution |
| 0 | 1.93 | 0 | 4.17 |
| 15 | 4.52 | 0 | 2.80 |
| 30 | 6.93 | 0.78 | 5.85 |
| 45 | 9.77 | 1.78 | 3.44 |
| 60 | 12.91 | 2.06 | 3.50 |
| 90 | 18.51 | 2.53 | 3.54 |
| 120 | 24.01 | 2.60 | 3.11 |

Even though the comonomer level in the polymer is higher than in Example 1, the percentage of polymer which is soluble in the monomer is still low. The comonomer content levels off before the end of the batch time.

### Example VI

### Sequential Copolymerization Without Continous Comonmer Addition

Example IV was repeated except that 1000 g of 1-decene was added at the 15 minute point and there was no additional 1-decene added during the remainder of the run. The data from the samples taken during this experiment are shown in Table 4.

**Table 4**

| Samples Taken For Example 6 | | | |
|---|---|---|---|
| Time | % Conversion | Mole % Comonomer in the Polymer | Wt. % of the Polymer in Solution |
| 0 | 2.16 | 0 | 1.67 |
| 15 | 4.93 | 0 | 1.50 |
| 30 | 8.00 | 1.12 | 2.00 |
| 45 | 13.4 | 2.00 | 1.78 |
| 60 | 17.3 | 2.48 | 1.30 |
| 90 | 23.7 | 2.47 | 1.21 |
| 120 | 30.5 | 2.23 | 0.93 |

The percentage of polymer in solution stayed very low with this procedure but the comonomer content in the copolymer peaked before the end of the run and had begun to decrease. Accordingly, the copolymer produced by this process would not be as homogeneous as the copolymer produced by the processes of Examples IV and V.

## Claims

1. A process for producing a 4-methyl-1-pentene copolymer characterized by subjecting to a slurry batch copolymerization 4-methyl-1-pentene and at least one alpha olefin comonomer, wherein once polymerization of the comonomer has begun comonomer is added continuously to replace consumed comonomer.

2. The process of claim 1 wherein said comonomer is selected from linear alpha olefins.

3. The process of claim 2 wherein said linear alpha olefin contains from 5 to 18 carbon atoms.

4. The process of any of the preceding claims wherein homopolymerization of the 4-methyl-1-pentene is started before the comonomer addition.

5. The process of claim 4 wherein the amount of the 4-methyl-1-pentene homopolymerized before the addition of comonomer is no greater than 20 weight percent of the 4-methyl-1-pentene contained in the end product copolymer.

6. The process of claim 5 wherein the initial charge of said comonomer is greater than the amount of said comonomer added per minute after copolymerization has begun.

7. The process of any of the preceding claims wherein said comonomer is selected from 1-decene and 1-hexadecene.

8. The process of any of the preceding claims which produces a copolymer having less than 10 weight percent comonomer.

9. The process of claim 8 which produces a coploymer containing between 2.3 and 10 weight percent 1-hexadecene.

10. The process of claim 1 wherein at least one of said comonomers is present when polymerization of the 4-methyl-1-pentene begins.

11. The process of claim 10 wherein a mixture of 4-methyl-1-pentne and comonomers is charged before polymerization is begun.
